# EUROPÄISCHE PATENTSCHRIFT

(11) **EP 1 080 302 B1**
(45) Veröffentlichungstag und Bekanntmachung des Hinweises auf die Patenterteilung: **03.07.2002**
(21) Anmeldenummer: 99936294.0
(22) Anmeldetag: 18.05.1999
(51) Int. Cl.: F02K 9/10, F02K 9/34, F02K 9/40, F02K 9/36, C06B 45/00

(54) **MODULARE FESTSTOFFRAKETENTREIBSÄTZE MIT UMMANTELUNG, FILL-DRAIN SYSTEM, KÜHLUNG UND AUFHÄNGUNG**
MODULAR SOLID-FUEL ROCKET PROPELLING CHARGES WITH A CASING, A FILL-DRAIN SYSTEM, COOLING AND SUSPENSION
BLOCS PROPULSIFS MODULAIRES POUR FUSEES A PROPERGOL SOLIDE, COMPORTANT UNE ENVELOPPE, UN SYSTEME DE REMPLISSAGE-VIDAGE, UN DISPOSITIF DE REFROIDISSEMENT ET UNE SUSPENSION

(30) Priorität: 22.05.1998 DE 19822845
(43) Veröffentlichungstag der Anmeldung: 07.03.2001
(73) Patentinhaber: Lo, Roger E., 13465 Berlin (DE)
(72) Erfinder: Lo, Roger E., 13465 Berlin (DE)
(74) Vertreter: COHAUSZ DAWIDOWICZ HANNIG & PARTNER
(86) Internationale Anmeldenummer: DE9901517
(87) Internationale Veröffentlichungsnummer: WO9961774

(56) Entgegenhaltungen:
- DE-A- 19 756 794
- DE-C- 976 057
- FR-A- 1 114 843
- US-A- 3 137 127
- US-A- 3 176 618
- US-A- 3 204 560
- US-A- 3 527 168
- US-A- 3 995 559
- US-A- 5 175 022

## Beschreibung

Die Erfindung betrifft modulare Feststoffraketentreibsätze mit verschiedenen Treibstoffkomponenten und anderen Komponenten; beispielsweise Brennstoffe, Oxydatoren, energiesteigernde Zusätze, Binder, Additive, Abdeckungen, Inhibitoren etc., die ganz oder teilweise fragmentiert sein können, d.h. nicht in Form der herkömmlichen quasihomogenen Mischung, sondern in Form eines oder mehrerer makroskopischer Brennelemente mit beliebiger zweckentsprechender Gestaltung vorliegen, wobei alle oder einzelne Komponenten auch aus Stoffen bestehen können, die erst durch Kühlung in hinreichend festen Zustand gebracht werden müssen, wobei die Treibsätze als Ganzes oder einzelne ihrer Brennelemente mit einer speziellen Ummantelung versehen sind.

Damit betrifft die Erfindung das technische Gebiet der Raketenantriebe und darin Herstellung, Aufbau und sichere Lagerung von Feststofftreibsätzen. Als Feststofftreibsatz wird in diesem Zusammenhang der in einer bestimmten geometrischen Form vorliegende, einfache oder zusammengesetzte Treibstoffblock einschließlich eventueller Ein- oder Anbauten verstanden, die aus verschiedenen Gründen angebracht sind und meistens durch Abbrand verbraucht werden.

Kryogene, modulare als Innen- und Stirnbrenner fungierende Treibsätze sind aus der US-A 3 137 127 bekannt. Diese bekannten Treibsätze sind teilweise fragmentiert, d.h. dass mindestens eine der Komponenten nicht in der herkömmlichen innigen Mischung mit den anderen Komponenten, sondern in Form eines oder mehrerer makroskopischer Brennelemente mit beliebiger zweckentsprechender geometrischer Gestaltung vorliegt. Die Brennelemente sind durch geeignete Abdeckungen der Grenzflächen voneinander chemisch isoliert und können nötigenfalls gleichzeitig mechanisch miteinander verbunden sein. Des weiteren können die Brennelemente durch eine besondere Wahl ihrer Zusammensetzung geeignet sein, als Module mit verschiedenen Funktionen, beispielsweise der Zündung, Verbrennungsförderung, Gaserzeugung etc., zu dienen. Die Brennelemente können insbesondere die Form von Scheiben haben, deren äußere Fläche sich der Kontur der Raketenbrennkammer anpasst, während innen eine oder mehrere Bohrungen mit zweckentsprechender geformter Querschnittsfläche vorhanden sein können, die durch Aneinanderreihung einen Brennkanal oder mehrere Brennkanäle mit konstanter oder variabler Querschnittsfläche bilden; oder sie können mit verschiedenen, frei wählbaren Querschnittsformen in einer zusammenhängenden Matrix der jeweils anderen Treibstoffkomponente, beispielsweise ganz oder teilweise in eine Matrix aus Brennstoff eingebettete oxydatorreiche Elemente, untergebracht sein.

Stand der Technik bei konventionellen, d.h. lagerfähigen Festtreibstoffen ist die schichtweise Anordnung von Treibstoffkomponenten in sogenannten "Sandwichtreibstoffen", die bei diesen aber keine besonderen Vorteile bringt und daher keine wesentlichen Anwendungen gefunden hat.

Kryogene Festkörper als Treibstoffe werden am USAF-Phillips Lab (Edwards) seit 1994 in einem "High-energy density" Programm untersucht. Publiziert wurden 1997 Arbeiten an Hybriden (d.h. Antrieben mit flüssigen und festen Treibstoffkomponenten) mit gefrorenen Kohlenwasserstoffen als fester Komponente (s. C. Larson, USAF-Phillips Lab, 33rd AIAA/ASME/SAE/ASEE Joint Propulsion Conference and Exhibit, Washington State Convention and Trade Center, Seattle, WA, July 6-9, 1997, AIAA-96-3076).

Dieser bekannte Stand der Technik ist mit dem Problem behaftet, dass modulare, kryogene Feststofftreibsätze eine ständige Kühlung erfordern, um in einer normal temperierten Umgebung ihren Aggregatzustand beizubehalten. Bei Ausfall der Kühlung können diese Treibsätze schmelzen und verdampfen, so dass auf verschiedene Weise Anlass zur Entstehung sehr gefährlicher Situationen gegeben wird.

Der Erfindung liegt die Aufgabe zugrunde, modulare Feststoffraketentreibsätze der eingangs genannten Art derart zu verbessern, dass die Entstehung von Gefahrensituationen infolge Ausfalls der Kühlung bei gleichzeitiger Leistungssteigerung der Trägerraketen drastisch minimiert wird.

Diese Aufgabe wird durch modulare Feststoffraketentreibsätze der genannten Gattung mit den kennzeichnenden Merkmalen des Anspruches 1 gelöst. Vorteilhafte Ausgestaltungen sind den Unteransprüchen entnehmbar.

Je nach Kombination der im Hauptanspruch genannten Merkmale mit den in den Unteransprüchen vorteilhaften Ausgestaltungen der Erfindung lässt sich die Situation bei allen oder einigen der aufgezeigten Probleme erheblich verbessern. Der erfindungsgemäße modulare Feststoffraketentreibsatz erlaubt, dass Brennstoffe und Oxydatoren aus einer weiten Palette ausgewählt und getrennt zu Brennelementen geformt werden können, die zusammengesetzt die gewünschte Treibstoffgeometrie ergeben. Der dazu erforderliche Aggregatzustand wird nötigenfalls durch eine entsprechende Kühlung hergestellt und beibehalten. Die Bezeichnung "fragmentierter Treibsatz" (hier synonym mit "modularer", "separierter" oder "geteilter" Treibsatz) bezieht sich vor allem auf die Trennung der Hauptkomponenten (Brennstoff und Oxydator). Ein geeignetes Synonym für "Modularer Feststoffraketentreibsatz" ist "Multipler Interner Hybridantrieb".

Mit der Erfindung lassen sich folgende vorteilhafte Wirkungen erzielen:
- Die erfindungsgemäßen Treibsätze vereinfachen die Produktion von Feststofftreibsätzen erheblich. Viele gefährliche Prozeduren werden vermieden, Serienfertigung bietet sich an. Erhebliche Kostenreduktionen können erwartet werden. Diese Feststellung gilt unabhängig von eventuellen Komplikationen, die durch kryogene Feststoffe bedingt werden.
- Die erfindungsgemäßen Treibsätze vermeiden die große Phasengrenzfläche konventioneller Treibsätze. Bei warm lagerfähigen Treibstoffen ist dadurch eine Steigerung der Langzeitlagerfähigkeit zu erwarten, zudem können die Brennelemente nötigenfalls durch Isolierfolien von einander getrennt werden.
- Kryogene Treibstoffe sind zwar nicht lagerfähig, aber wegen der tiefen Temperaturen weniger reaktiv als warme. Dies kann in bestimmten Fällen den Einsatz spezieller hochenergetischer Stoffe ermöglichen, welche als Flüssigkeiten oder Gase zu reaktiv wären.
- Die erfindungsgemäßen Treibsätze erlauben es, jede beliebige Treibstoffkombination als monergolen Feststoffantrieb zu realisieren. Dies reicht von lagerfähigen oder kryogenen Flüssigkeitsmonergol- und Diergolantrieben über Hybrid- und Quasihybridantriebe, Suspensions- (Slurry) Antriebe und Tribride bis zu allen Triergolen. Es sind daher drastische Steigerungen des Isp nicht nur gegenüber konventionellen Festtreibstoffen, sondern sogar gegenüber den Stand der Technik Flüssigkeitsantrieben zu erwarten [siehe dazu R.E. LO, DFVLR-Stuttgart: "Chemische Wasserstoffaufheizung durch tribride Verbrennung", Chemie-Ingenieur-Technik (1967)39 , Heft 15, S. 923-927/ R.E.LO: Technical Feasibility of Chemical Propulsion Systems with very high Performance, Proceedings of the XVIIIth Astronautical Congress, Belgrad, 25.-29.9,1967, pp. 121-132/ R.E.LO, DFVLR-Lampoldshausen: "Theoretische Leistungen des Raketentreibstoffsystems F₂, O₂/LiH, Al/H₂ und einfacher Teilsysteme", DLR-Mitt. 69-21 (Dez. 1969/R.E. LO, DFVLR-Lampoldshausen: "Chemische Wasserstoffaufheizung durch Verbrennung von Aluminium mit Sauerstoff oder FLOX", DLR-Mitt. 70-03 (Feb. 1970)/R.E.LO, DFVLR-Lampoldshausen: "Quasihybride Raketenantriebe", Raumfahrtforschung, Heft 4, April 1970].
- Die erfindungsgemäßen Treibsätze erlauben durch geeignete Treibstoffauswahl, Festtreibsätze mit bestmöglicher Umweltfreundlichkeit zu realisieren, beispielsweise Festwasserstoff/Festsauerstoff.

Die Erfindung soll nachstehend in mehreren Ausführungsbeispielen anhand der Zeichnungen näher veranschaulicht werden.

Es zeigen:
- Fig. 1: einen Schnitt durch ein Brennelement eines erfindungsgemäßen hohlzylindrischen Treibsatzes,
- Fig. 2: die Befestigung der Festtreibstoffe mittels zugfester Elemente,
- Fig. 3: die Standardlösung der Versteifung des erfindungsgemäßen Treibsatzes,
- Fig. 4: eine weitere Variante der Unterstützung der Ummantelung,
- Fig. 5: eine Variante der Befestigung der zugfesten Elemente mit einer Steckhalterung,
- Fig. 6: eine Darstellung der doppelwandigen Ummantelung von Hohlzylinderringen mit einem durch Stege gebildeten Rohrsystem zum Kühlen,
- Fig. 7: eine Darstellung doppelwandigen Ummantelung von Hohlsegmenten mit einem durch Stege gebildeten Rohrsystem zum Kühlen,
- Fig. 8 und 9: eine einwandige Ummantelung mit aufgebrachten Kühlrohrschlangen und
- Fig. 10: ein Drainagesystem (Fill-drain System) der Ummantelung.

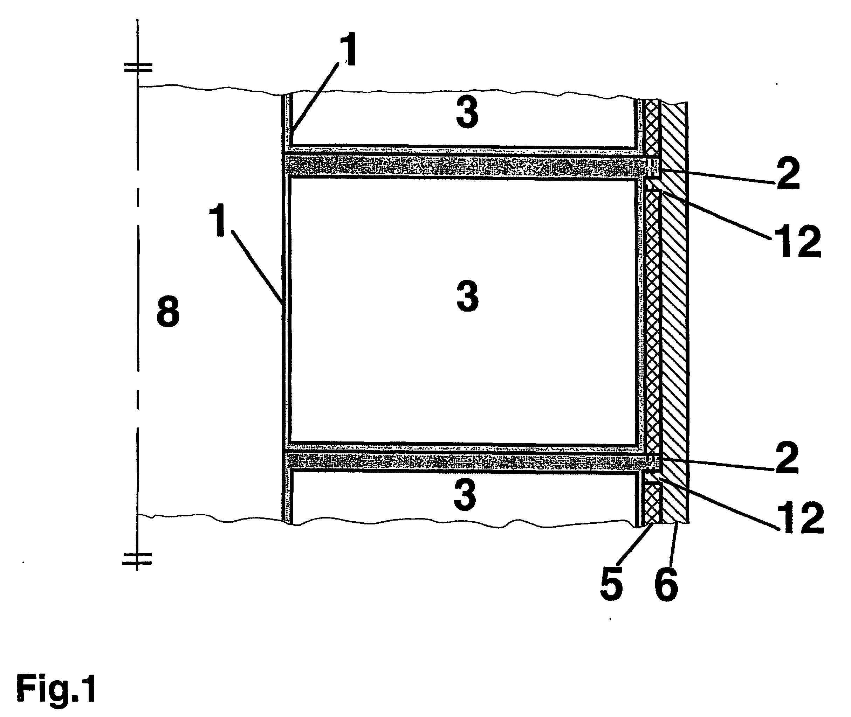

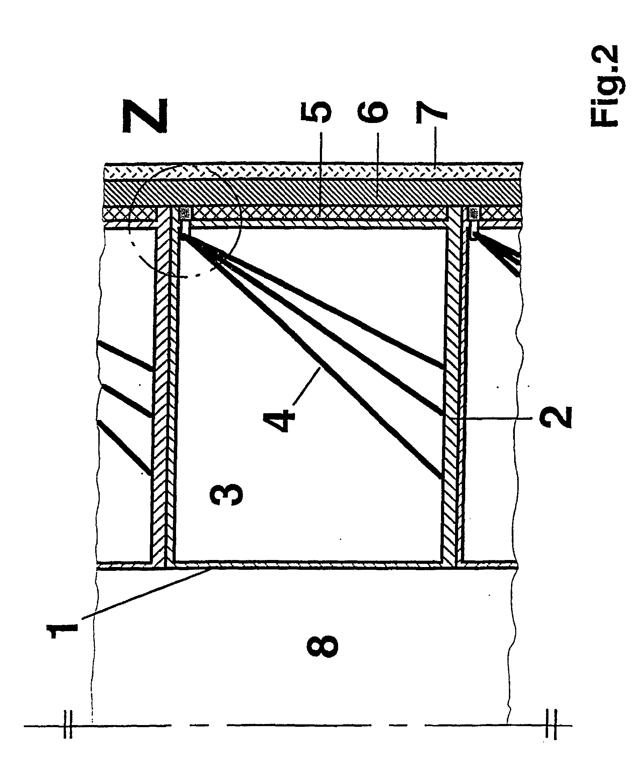

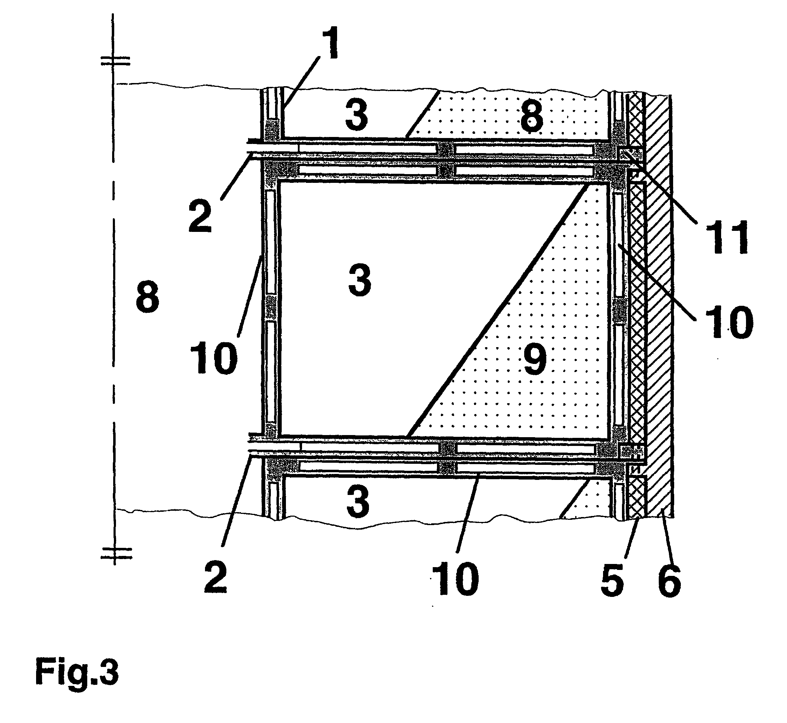

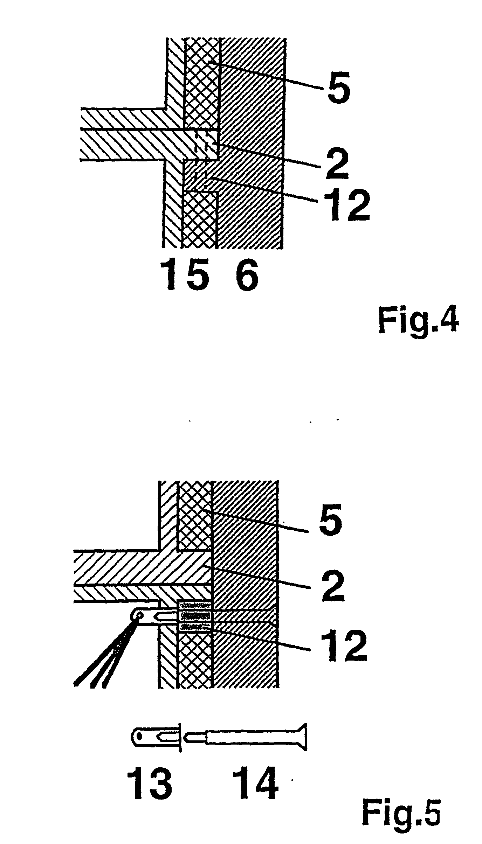

Alle und/oder einzelne Module der erfindungsgemäßen Treibsätze sind von einer chemisch mit dem Treibstoff verträglichen Ummantelung hinreichender Festigkeit und chemischer Verträglichkeit umgeben. Fig. 1 zeigt einen Schnitt durch ein Brennelement eines hohlzylindrischen Treibsatzes. Die Ummantelung **1** umschließt den Treibstoff **3**. Sie setzt sich in diesem Ausführungsbeispiel aus zylindrischen und kreisringförmigen Flächen zusammen, die bei der Herstellung, beispielsweise miteinander verklebt werden (auf Herstellungsverfahren wird hier nicht weiter eingegangen). Ein auskragender Rand der Ummantelung **1** bildet eine Unterstützung **2** für das Brennelement, das auf einer Auflage **12** der Brennkammerwand **6** aufliegt und an dieser durch eine Verschraubung befestigt ist (s.a. Fig. 4).
Diese Unterstützung **2** kann nach einem weiteren Ausführungsbeispiel, anders als in Fig. 1 gezeigt, natürlich ebenso gut, am unteren Ende eines Moduls sitzen. Durch Einlegen eines Montageringes **11** (siehe Fig. 3) erreicht man die Unterstützung an beiden Enden der zylindrischen Module.
Bei der Zündung ummantelter Treibsätze brennt eine Zündfackel (z.B. generiert von einem am Kopfende der Brennkammer gelegenen Modul, der aus einer selbstbrennenden Festtreibstoffmischung besteht) zunächst den Teil der Ummantelung **1** weg, welcher die Oberfläche des Brennkanals **8** bildet. Dieser Prozess geht nahtlos in die Verdampfung und Zündung der alternierenden Module aus Oxydator und Brennstoff über. Es ist evident, dass die Ummantelung **1** einerseits so dünn wie möglich, andererseits so dick wie notwendig zu sein hat. Außerdem sollten die Stirnflächen der Ummantelung **1**, welche die Grenzschichtflamme im Brennkanal **8** sehen, möglichst dieselbe Abbrandgeschwindigkeit wie die Treibstoffe **3** haben, was ein wenig durch die Materialwahl beeinflusst werden kann. Geometrische Formen des Treibstoffes, bei welchem die Innenseite der Brennkammerwand **6** unterschiedlich lang den Flammen ausgesetzt ist (z.B. Konozylbrenner oder Stirnbrenner), erfordern noch eine innere Wärmeschutzschicht **5**.
Bei der Montage ist zwischen segmentierten und nichtsegmentierten Brennkammern zu unterscheiden. Erstere verlangen eine bestimmte Reihenfolge. Jedes Modul kann unter gewissen Voraussetzungen gleichzeitig auch ein Brennkammersegment bilden. Treibstoff, Ummantelung, Aufhängung, Isolation und Brennkammersegment können dann gemeinsam vorbereitet werden. In der Regel wird das Korn aber von unten nach oben aufgebaut werden müssen. Die dargestellte Problematik ist sehr beispielspezifisch. Spezielle und beliebig andere geometrische Formen ergeben sich aus der gewünschten Schub-Zeit-Kurve des Triebwerkes bei gleichzeitig hohem Füllungsgrad. Für alle Formen gilt natürlich immer, dass sie zusammen mit Ummantelungen, Isolierschichten, Aufhängungen etc. montierbar sein müssen.
Die Sprödigkeit von Eisblöcken kann besonders bei dynamischen Belastungen ein Problem sein. Als Lösung kommt der Einsatz druckmetamorpher Eiskristalle in Frage, die im Verbund viel geringere Sprödigkeit aufweisen (Unterschied zwischen Schneeball und Eiszapfen). Während Schneeblöcke aus Wassereis recht belastbar sind (Igluprinzip) könnte dies bei gefrorenen Treibstoffen anders sein. Durch Befestigung an der Brennkammerwand **6** können die Festigkeitsansprüche stark reduziert werden. Der Treibstoffblock muss dann unter den Bedingungen der Flugbeschleunigung nicht mehr alle darüber liegenden Elemente tragen, sondern nur noch selbst standfest sein.
Für solche Festtreibstoffe zeigt Fig. 2 eine Variante der Befestigung mit Spanndrähten **4**, welche den Vorteil hat, dass zum Ummantelungsmaterial wenig weiteres treibstofffremdes Material hinzugefügt wird, welches die Bruttozusammensetzung des Treibstoffkornes verändert.
Die Fig. 3 zeigt dagegen eine Standardlösung der Versteifung **9** eines Kastens, die zwar einfacher zu montieren wäre, aber weitere Flächen aus Mantelmaterial beiträgt.

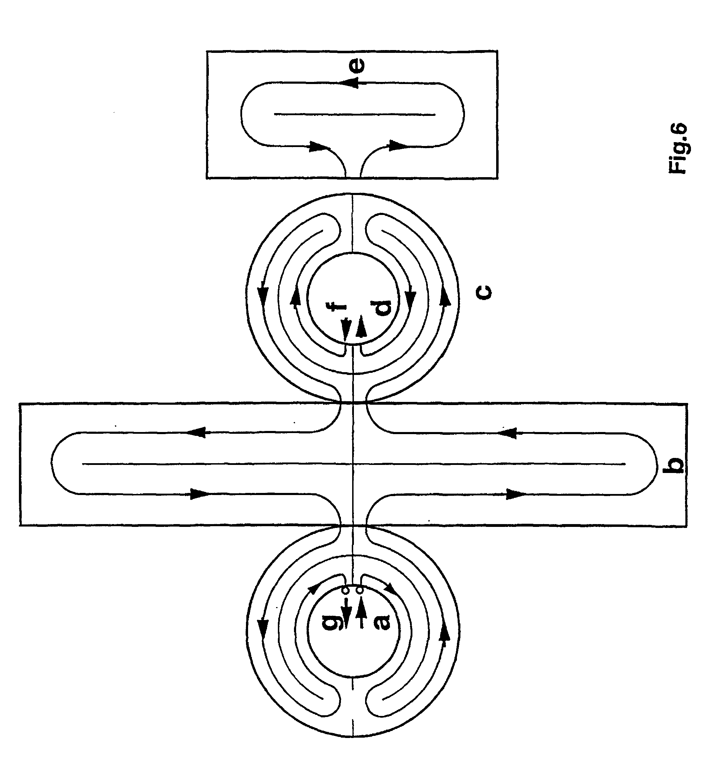

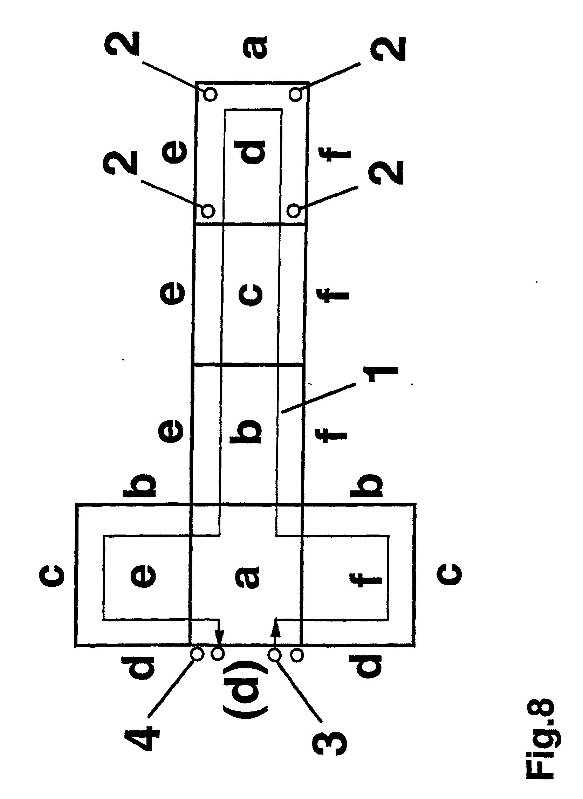

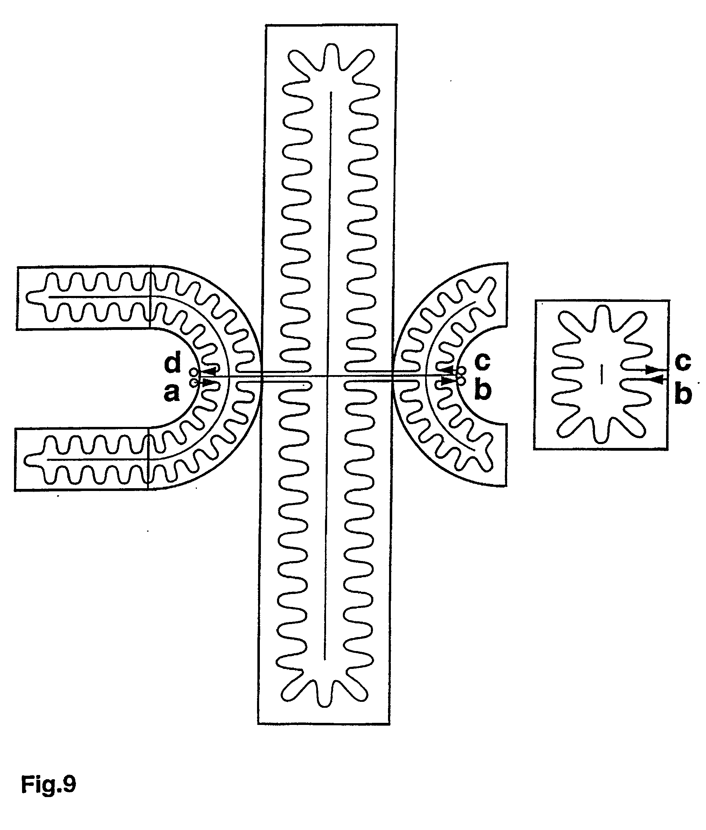

Bei der Wahl von Zahl und Anordnung der Spanndrähte **4** ist zu berücksichtigen, dass diese abbrennen, sobald die Abbrandoberfläche sie erreicht hat. Der Zusammenbau erfolgt so, dass zunächst die auf geeignete Weise (nicht dargestellt) an der Bodenplatte befestigten Drähte **4** mit einer Steckhalterung **13** verbunden sind (s. Fig. 5), welche dicht in der Außenfläche der Ummantelung 1 sitzt und durch geeignete Formgebung gegen Verdrehung geschützt ist. Sie werden zusammen mit dieser bei Füllung und Verschluss des Treibstoffelements im Treibstoff **3** eingebettet. Nach dem Einsetzen des Brennelements in die Brennkammer (oder in sein Brennkammerwandsegment) wird das Ganze durch dicht sitzende Steckschrauben **14** von außen befestigt. Auf Dichtungen und andere Details wird hier nicht eingegangen. Eine eventuell erforderliche Wärmeschutzschicht (siehe TPS **7** in Fig. 2) kann in diesem Fall erst nachträglich angebracht werden.
Kühlbare Ummantelungen können nach einen weiteren Ausführungsbeispiel, wie in Fig. 3 dargestellt, doppelwandig gefertigt sein. Die einzelnen Mantelflächen werden dabei von Kühlkanälen **10** dergestalt durchzogen, dass jedes Treibstoffelement mindestens je einen Einlass und Auslass hat. Die Wände von Hohlzylinderringen (s.

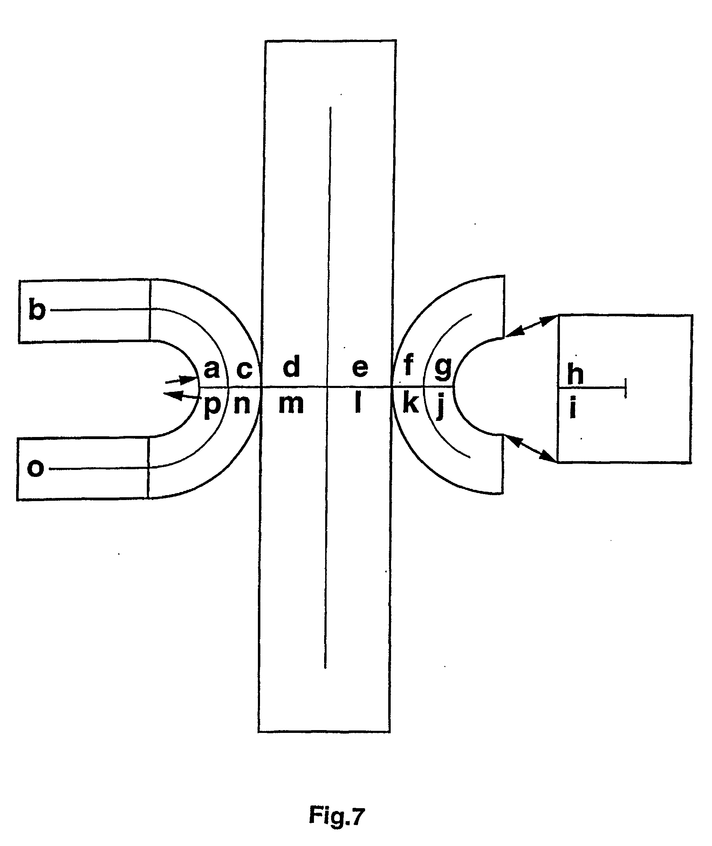

Fig. 6) oder Hohlzylindersegmenten (s. Fig. 7) lassen sich immer mit einem oder mehreren parallel zum äußeren Umfang gelegenen Stegen versehen, welche als Abstandhalter zwischen den Doppelwänden sitzen und die innere Begrenzung der Kanäle **10** bilden. Der Durchfluss des Kühlmediums erfolgt entsprechend der alphabetischen Numerierung von **a** nach **g** in Fig. 6 oder von **a** nach **p** in Fig. 7.
Gleicherweise können auf einfachen Ummantelungswänden Kühlrohrschlangen angebracht werden (s. Fig. 8 und 9).

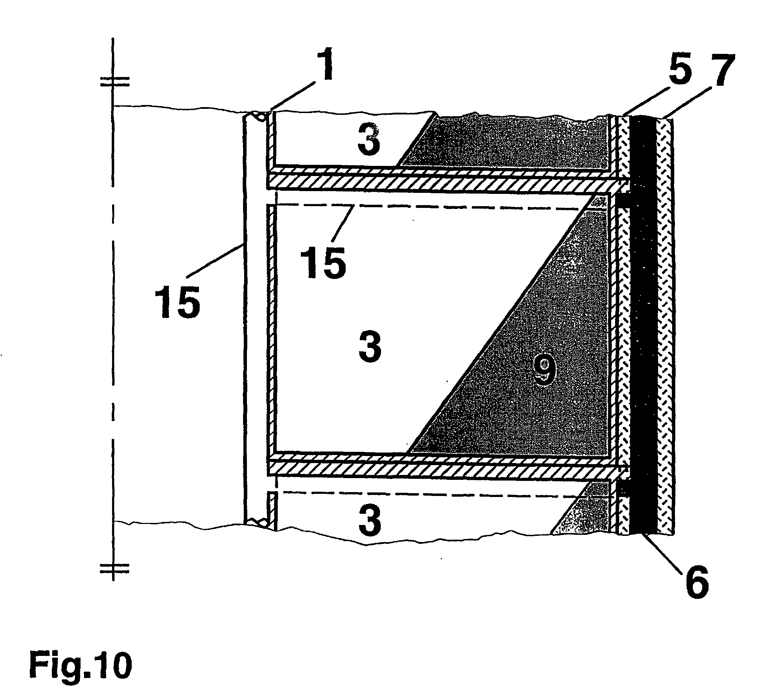

In beiden Fällen steht das interne Kanal- oder Leitungssystem (Durchfluss entsprechend alphabetischer Numerierung in Fig. 8 und 9) mit Zuführleitungen außerhalb der Ummantelung in Verbindung, die durch Brennkanal und Düse, oder durch die Brennkammerwand geleitet werden können. In beiden Fällen sind Schnellverschlüsse erforderlich, wie sie ähnlich bei Flüssigkeitsraketen in Gebrauch sind. Bei Zugang durch die Wand müssten diese auch entsprechend druckfest sein. Ähnliches gilt für die Zuleitung des Fill-drain Systems **15** (siehe Fig. 10). Die Zu- und Ableitungen dieses Systems sind aber nur mit dem höchst- und/oder tiefstgelegenen Teil eines ummantelten Volumens verbunden. Fig. 10 zeigt ein Drainagesystem, durch welches die ursprüngliche Gasfüllung (z.B. Helium) entweichen kann, während flüssiger Treibstoff durch einen gleichartigen Zulauf (nicht gezeigt) einströmt.

Die dargestellten Abmessungen der Rohre sind wie jene aller anderen Details in allen Zeichnungen ohne Bedeutung. Die Wärmeableitung durch das Kühlsystem ist der geschwindigkeitsbestimmende Schritt beim Einfrieren der Treibstoffe, die Wärmezuleitung durch den Brennkanal und die äußere Isolation jener bei ihrem langsamen Abtauen. Daher kann das Fill-drain System Rohre kleinen Querschnitts verwenden. Dies ist vorteilhaft, da ja das gesamte System zusammen mit dem Kühlsystem beim Betrieb des Motors abgebrannt wird. Im einfachsten Fall braucht jedes Brennelement einen eigenen Anschluss an das Füllsystem, weil eine Serienschaltung (natürlich immer getrennt nach Brennstoff und Oxydator) in der Regel nicht problemlos möglich sein wird. Unter Umständen ist die serielle Füllung aber mit sehr einfachen Maßnahmen denkbar. Beispielsweise könnten die jeweils höchsten und tiefsten Punkte der Hohlzylinderringe, die sich beim hier beschriebenen Ausführungsbeispiel in schräg gestellter Position ergeben, miteinander verbunden werden. Das Füllsystem endet somit beim obersten Element mit einem Ablauf an dem Punkt, der in der gekippten Lage der höchste ist.

Das in Fig. 10 gezeigte Drainsystem verbindet dagegen mit einem einzigen Ablauf und je einem Anschluss alle Brennstoff- und getrennt davon alle Oxydatorelemente. Es funktioniert in vertikaler Lager des Motors, dient nur der Drainage beim Abtauen und muss beim Füllen mit seriellen Zulauf verschlossen bleiben.
Die hier geschilderte- Vorgehensweise soll nicht ausschließen, dass die Brennelemente modulweise einzeln in besonderen Vorrichtungen hergestellt und dann in der Brennkammer zu einem Korn, oder bei segmentierter Bauweise zur Brennkammer integriert werden. Falls es die Integrationsprozedur nicht anders erlaubt, müssen die geschilderten Rohrsysteme natürlich auf geeignete Weise durch Verbindungen in sich zusammengefügt werden.

Allen Beispielen gemeinsam ist, dass sie nur als exemplarische Lösungen zur Verdeutlichung der Prinzipien gedacht sind.

### Aufstellung der verwendeten Bezugszeichen

- **1**: Ummantelung
- **2**: Unterstützung, Rand
- **3**: Treibstoff
- **4**: Aufhängung/Spanndraht/zugfeste Elemente
- **5**: Wandauskleidung/Wärmeschutzschicht
- **6**: Brennkammerwand
- **7**: TPS/Hitzeschutzsystem/
- **8**: Brennkanal
- **9**: Versteifung
- **10**: Kühlkanäle/Rohrsystem
- **11**: Montagering
- **12**: Auflage
- **13**: Steckhalterung
- **14**: Steckschraube
- **15**: Fill-drain
- **a-p**: Durchfluss

## Patentansprüche

1. Modulare Feststoffraketentreibsätze mit verschiedenen Treibstoffkomponenten und anderen Komponenten, beispielsweise Brennstoffe, Oxydatoren, energiesteigernde Zusätze, Binder, Additive, Abdeckungen, Inhibitoren etc., die ganz oder teilweise fragmentiert sind, d.h. nicht in Form der herkömmlichen quasihomogenen Mischung, sondern in Form eines oder mehrerer makroskopischer Brennelemente mit beliebiger zweckentsprechender Gestaltung vorliegen, wobei alle oder einzelne Komponenten auch aus Stoffen bestehen können, die erst durch Kühlung in hinreichend festen Zustand gebracht werden müssen, wobei die Treibsätze als Ganzes oder einzelne ihrer Brennelemente mit einer speziellen Ummantelung versehen sind, die es erlaubt, solche Treibsätze zu lagern und/oder bestimmungsgemäß zu betreiben, ohne dass Probleme durch die Temperaturabhängigkeit der mechanischen Eigenschaften oder des Aggregatzustandes entstehen,
**dadurch gekennzeichnet, dass** die Ummantelung einen auskragenden Rand **(2)** zur Aufhängung des Treibsatzes bzw. Brennelementes auf einer nach innen vorspringenden Auflage einer Brennkammerwand **(6)** aufweist.

2. Feststoffraketentreibsätze nach Anspruch 1, **dadurch gekennzeichnet, dass** die Ummantelung **(1)** der Brennelemente mit besonderen zugfesten Elementen **(4;9)** ausgerüstet oder verbunden ist und somit gleichzeitig für das jeweilige Brennelement als mechanische Unterstützung im Inneren der Brennkammer dient.

3. Feststoffraketentreibsätze nach Anspruch 1, **dadurch gekennzeichnet, dass** die Ummantelung **(1)** mit einem besonderen Rohrsystem **(10)** ausgerüstet und/oder verbunden ist, welches von geeigneten Medien durchströmt werden kann und es erlaubt, die Brennelemente bis kurz vor Zündung des Antriebs in einem gewünschten Temperaturbereich zu halten.

4. Feststoffraketentriebsätze nach Anspruch 1, **dadurch gekennzeichnet, dass** das Innere der Ummantelung **(1)** mit einem besonderen Rohrsystem **(10)** ausgerüstet und/oder verbunden ist, welches bis kurz vor Zündung des Antriebs erlaubt, flüssige oder gasförmige Medien zu- oder abzuleiten, insbesondere auch bei nicht genügender Wärmeisolation oder bei Ausfall des Kühlsystems.

## Claims

1. Modular solid-fuel rocket propellant charges with different propellant components and other components, for instance fuel, oxidants, energy-enhancing admixtures, binders, additives, coatings, inhibitors etc., which are completely or partially fragmented, i.e. not in form of the conventional quasi-homogeneous mixture, but in the form of one or more macroscopic fuel elements having any suitable configuration, whereby all or single components can also consist of substances which have first to be brought to a sufficiently solid state through cooling, whereby as a whole or as individual combustible thereof, the charges are surrounded by a special casing, which allows the storage of such propellant charges and/or their according to the purpose, without triggering the development of problems due to the temperature dependence of the mechanical properties or to the aggregate state, **characterized in that**, the casing has a projecting rim **(2)** for suspension of the charge or fuel element on a support of a combustion chamber **(6)** wall overhanging into the inside of the combustion chamber.

2. Solid-fuel rocket propellant charges according to claim 1, **characterized in that**, the casing **(1)** of the fuel elements are equipped or connected with special strong in tension elements **(4;9)** which at the same time serve as mechanical support for the respective fuel elements inside the combustion chamber.

3. Solid-fuel rocket propellant charges according to claim 1, **characterized in that,** the casing **(1)** is equipped and/or connected with a special pipe system **(10)**, which can be passed by suitable media and which allows to maintain the fuel elements within a desired temperature range up to the point of motor ignition.

4. Solid-fuel rocket propellant charges according to claim 1, **characterized in that,** the interior of the casing **(1)** is equipped and/or connected with a special pipe system **(10)** which if required allows the supply and discharge of liquid or gaseous media up to the point of motor ignition, particularly even in cases of insufficient heat insulation, or of failure of the cooling system.

## Revendications

1. Moteurs-fusées à propersol solide avec différentes composantes de combustibles, par exemple des carburants, oxydants, additifs intensifiant l'énergie, liants, autres produits d'addition, recouvrements, inhibiteurs, etc..., qui sont fragmentés entièrement ou partiellement, c'est-à-dire ne pas sous forme du mélange classique quasiment homogène, mais qui se présentent sous forme d'un élément de combustible macroscopique ou de plusieurs à configuration quelconque convenant au but, toutes les composantes ou bien quelques-unes pouvant comprendre des substances devant d'abord être portées à un état suffisamment solide par refroidissement, les propersols solides devant être pourvus, dans leur totalité ou quelques-uns de leurs éléments de combustible, d'une enveloppe spéciale, qui permet de stocker de tels propergols solides et/ou de les exploiter conformément au but, sans qu'il se présentent des problèmes en fonction de la variabilité avec la température des propriétés mécaniques ou de l'état physique, **caractérisé en ce que** l'enveloppe présente un bord en saillie **(2)** pour la suspension respectivement du propergol solide et de l'élément de combustible sur un support avancé vers l'intérieur d'une paroi de chambre du moteur de fusée **(6).**

2. Moteurs-fusées à propersol solide suivant la revendication 1, **caractérisé en ce que** l'enveloppe **(1)** des éléments de combustible est équipée d'éléments spéciaux ou reliée à ceux-ci, résistant à la traction **(4 ;9),** et qu'elle serve en même temps d'appui mécanique pour l'élément de combustible concerné à l'intérieur du moteur de fusée.

3. Moteurs-fusées à propersol solide suivant la revendication 1, **caractérisé en ce que** l'enveloppe **(1)** est équipée d'un système de conduites spécial **(10)** ou reliée à celui-ci, pouvant être parcouru de fluides appropriés et permettant de maintenir les éléments de combustible dans une zone de température voulue jusqu'au moment immédiatement avant l'allumage du moteur-fusée.

4. Moteurs-fusées à propersol solide suivant la revendication 1, **caractérisé en ce que** l'intérieur de l'enveloppe **(1)** est équipée d'un système de conduites spécial **(10)** ou reliée à celui-ci, permettant jusqu'au moment immédiatement avant l'allumage du moteur-fusée d'amener ou d'emmener des fluides liquides ou gazeux, notamment en cas d'isolation thermique insuffisante ou en cas de défaillance du système de refroidissement.
